# EUROPÄISCHE PATENTSCHRIFT

(11) **EP 3 604 842 B1**
(45) Veröffentlichungstag und Bekanntmachung des Hinweises auf die Patenterteilung: **20.01.2021**
(21) Anmeldenummer: 19186749.8
(22) Anmeldetag: 17.07.2019
(51) Int. Cl.: F16C 35/02, F16C 33/14, F16C 33/08, F16C 33/20, F16C 33/24

(54) **VERFAHREN ZUR HERSTELLUNG EINER ROTOREINHEIT**
METHOD FOR PRODUCING A ROTOR UNIT
PROCÉDÉ DE FABRICATION D'UNE UNITÉ DE ROTOR

(30) Priorität: 30.07.2018 DE 102018118341
(43) Veröffentlichungstag der Anmeldung: 05.02.2020
(73) Patentinhaber: Schunk Sintermetalltechnik GmbH, 35452 Heuchelheim (DE)
(72) Erfinder: BITTENDORF, Tobias, 35435 Wettenberg (DE); WEIK, Michael, 35435 Wettenberg (DE)
(74) Vertreter: advotec.

(56) Entgegenhaltungen:
- US-A1- 2009 103 840
- US-A1- 2015 377 245

## Beschreibung

Die Erfindung betrifft ein Verfahren zur Herstellung einer Rotoreinheit oder einer Lagereinheit sowie eine Rotoreinheit bzw. eine Lagereinheit, wobei die Rotoreinheit mit einem Rotor und einer Gleitlagerbuchse zur drehbaren Anordnung des Rotors auf einer Achse ausgebildet wird, wobei die Gleitlagerbuchse in eine Form eingelegt wird, wobei der Rotor durch Anbringen eines polymeren Werkstoffs an der Gleitlagerbuchse mittels eines Spritzpressverfahrens oder Spritzgießverfahrens in der Form ausgebildet wird, wobei die Gleitlagerbuchse aus einem ersten Buchsenabschnitt und einem mit dem ersten Buchsenabschnitt verbundenen zweiten Buchsenabschnitt ausgebildet wird.

Rotoreinheiten aus polymeren Werkstoffen sind aus dem Stand der Technik hinlänglich bekannt und werden regelmäßig als eine Bauteilkomponente eines Spaltrohrmotors oder einer Pumpe, beispielsweise mit einem an der Rotoreinheit angeformten Impeller, in Heizkreisläufen oder in Fahrzeugen eingesetzt. Bei Spaltrohrmotoren ist eine Rotoreinheit und ein Stator des Elektromotors durch ein Spaltrohr getrennt, wobei dieses in einem Luftspalt zwischen dem Stator und der Rotoreinheit angeordnet ist. Dadurch wird es möglich die Rotoreinheit gegenüber den unbewegten Bauteilen der Pumpe ohne eine Verwendung von Dichtungen hermetisch dicht abzutrennen. Ein Antrieb der Rotoreinheit erfolgt dann bürstenlos, das heißt mit einem permanentmagnetischen oder fremderregten Anker der Rotoreinheit. Der Rotor und die Gleitlagerbuchse werden in der Pumpe von dem zu fördernden Medium umspült, wobei an einem Ende des Rotors dann ein Pumpenrad beziehungsweise ein Impeller angeordnet ist. Um eine lange Lebensdauer der Pumpe zu gewährleisten, werden besondere Anforderungen an eine Gleitpaarung der Achse und der Gleitlagerbuchse gestellt. In Abhängigkeit eines zu fördernden Mediums können Schmutzpartikel in einem Lagerspalt der Achse oder eine Aufrauung einer Lagerfläche der Achse infolge von Korrosion zu einem erhöhten Verschleiß der Achse beziehungsweise der Gleitlagerbuchse führen.

Da die Rotoreinheit jedoch auch in großen Stückzahlen kostengünstig herstellbar sein soll, wird die Gleitlagerbuchse aus einem geeigneten Material durch Sintern, Spritzpressverfahren oder Spritzgießverfahren hergestellt und mechanisch beziehungsweise spanend bearbeitet, um so die erforderlichen Toleranzen der Lagerflächen der Gleitlagerbuchse einhalten zu können. Diese Gleitlagerbuchse wird dann in eine Form eingelegt und mittels eines polymeren Werkstoffs, der sich regelmäßig von dem Werkstoff der Gleitlagerbuchse unterscheidet, umspritzt. Bei diesem Arbeitsschritt kann dann beispielsweise ein Impeller und ein Anker des so ausgebildeten Rotors an die Gleitlagerbuchse angeformt werden.

Nachteilig bei den bekannten Herstellungsverfahren ist, dass sich bei dem Spritzpressverfahren und dem Spritzgießverfahren je nach verwendeten Materialien große Toleranzbereiche ergeben. Auch ist es mit diesem Verfahren nicht möglich eine ausreichend zylindrische Lagerbohrung in der Gleitlagerbuchse herzustellen, weshalb in einem Mittenbereich der Gleitlagerbuchse bewusst ein etwas größerer Innendurchmesser der Lagerbohrung ausgebildet wird. Ein dazu verwendeter Innendorn einer Form muss dann jedoch zwangsentformt werden, was sich auf die Funktionsmerkmale, wie Innendurchmesser, Form- und Lagetoleranzen, negativ auswirkt. Als weiterer Nachteil erfordert die nötige Längentoleranz eine Nachbearbeitung der einteiligen Gleitlagerbuchse. So ist zumindest eine spanende Bearbeitung einer Länge der Gleitlagerbuchse und gegebenenfalls der Bohrung erforderlich, um die für eine lange Lebensdauer erforderlichen, gewünschten Toleranzen einhalten zu können.

Die US 2015/0377245 A1 zeigt eine Lagereinheit für Lüfter, Gebläse, Ventilatoren oder dergleichen, wobei die Lagereinheit eine Gleitlagerbuchse umfasst, welche an ein Gehäuse der Lagereinheit mittels eines Spritzgießverfahrens angebracht wird. Die Gleitlagerbuchse ist aus zwei Buchsenteilen ausgebildet, welche miteinander verklebt sein können. Ein erstes als zylinderförmiger Körper ausgebildetes Buchsenteil besteht aus Metall und wird aus einer Platte durch Pressen oder Tiefziehen geformt. Ein weiteres an einem Innendurchmesser des ersten Buchsenteils angeordnetes Buchsenteil sowie das Gehäuse der Lagereinheit können durch ein Spritzgussverfahren hergestellt sein. Dabei wird eine Länge der Gleitlagerbuchse in axialer Richtung allein durch die Länge des ersten Buchsenteils definiert.

Die US 2009/0103840 A1 zeigt eine weitere Lagereinheit, bei der eine Gleitlagerbuchse der Lagereinheit zwei bzw. drei Buchsenteile umfasst. Ein durch ein Spritzgießverfahren hergestellter erstes Buchsenteil erstreckt sich dabei über die gesamte axiale Länge der Gleitlagerbuchse. Ein weiteres aus Metall bestehendes Buchsenteil ist an einem Innendurchmesser der Gleitlagerbuchse in eine Ausnehmung des zuvor genannten Buchsenteils eingesetzt. Dabei kann auch vorgesehen sein, dass in dem ersten Buchsenteil zwei Buchsenteile eingefügt sind und derart voneinander beabstandet sind, dass zwischen einer Welle und dem ersten Buchsenteil an dessen Innendurchmesser ein Spalt entsteht.

Der vorliegenden Erfindung liegt daher die Aufgabe zugrunde, ein Verfahren zur Herstellung einer Rotoreinheit beziehungsweise Lagereinheit, eine Rotoreinheit für einen Spaltrohrmotor, eine Lagereinheit und eine Pumpe mit einer Rotoreinheit beziehungsweise Lagereinheit vorzuschlagen, das beziehungsweise die eine genaue und zugleich kostengünstige Herstellung in großen Stückzahlen ermöglicht.

Diese Aufgabe wird durch ein Verfahren mit den Merkmalen der Ansprüche 1 oder 2, eine Rotoreinheit mit den Merkmalen des Anspruchs 21, eine Lagereinheit mit den Merkmalen des Anspruchs 22 und eine Pumpe mit den Merkmalen des Anspruchs 23 gelöst.

Bei dem erfindungsgemäßen Verfahren zur Herstellung einer Rotoreinheit wird die Rotoreinheit mit einem Rotor und einer Gleitlagerbuchse zur drehbaren Anordnung des Rotors auf einer Achse ausgebildet, wobei die Gleitlagerbuchse in eine Form eingelegt wird, wobei der Rotor durch Anbringen eines polymeren Werkstoffs an der Gleitlagerbuchse mittels eines Spritzpressverfahrens oder Spritzgießverfahrens in der Form ausgebildet wird, wobei die Gleitlagerbuchse aus einem ersten Buchsenabschnitt und einem mit dem ersten Buchsenabschnitt verbundenen zweiten Buchsenabschnitt ausgebildet wird, wobei die Buchsenabschnitte in die Form eingelegt werden, wobei der polymere Werkstoff an den Buchsenabschnitten angebracht wird, wobei zwischen dem ersten Buchsenabschnitt und dem zweiten Buchsenabschnitt eine Verbindungspassung ausgebildet wird, die eine Relativbewegung der Buchsenabschnitte in axialer Richtung ermöglicht.

Bei dem erfindungsgemäßen Verfahren zur Herstellung einer Lagereinheit wird die Lagereinheit mit einem Lagergehäuse und einer Gleitlagerbuchse zur drehbaren Anordnung einer Achse eines Rotors ausgebildet, wobei die Gleitlagerbuchse in eine Form eingelegt wird, wobei das Lagergehäuse durch Anbringen eines polymeren Werkstoffs an der Gleitlagerbuchse mittels eines Spritzpressverfahrens oder Spritzgießverfahrens in der Form ausgebildet wird, wobei die Gleitlagerbuchse aus einem ersten Buchsenabschnitt und einem mit dem ersten Buchsenabschnitt verbundenen zweiten Buchsenabschnitt ausgebildet wird, wobei die Buchsenabschnitte in die Form eingelegt werden, wobei der polymere Werkstoff an den Buchsenabschnitten angebracht wird, wobei zwischen dem ersten Buchsenabschnitt und dem zweiten Buchsenabschnitt eine Verbindungspassung ausgebildet wird, die eine Relativbewegung der Buchsenabschnitte in axialer Richtung ermöglicht.

Die Gleitlagerbuchse ist demnach zumindest zweiteilig ausgebildet, wobei der erste Buchsenabschnitt mittelbar oder unmittelbar mit dem zweiten Buchsenabschnitt verbunden wird. Dies erfolgt einfach dadurch, dass die jeweiligen Buchsenabschnitte in die Form eingelegt werden, beispielsweise durch Aufstecken auf einen Dorn. Nach dem Einlegen der Buchsenabschnitte in die Form wird der polymere Werkstoff mittels des Spritzpressverfahrens oder Spritzgießverfahrens in die Form eingebracht und durch Aushärten an der Gleitlagerbuchse beziehungsweise den Buchsenabschnitten befestigt. Der dann eingespritzte polymere Werkstoff bildet so den Rotor der Rotoreinheit oder das Lagergehäuse der Lagereinheit aus. Dadurch, dass die Gleitlagerbuchse zumindest zweiteilig ausgebildet wird, ist es möglich die jeweiligen Buchsenabschnitte unabhängig voneinander herzustellen. Es ist dann auch nicht mehr erforderlich, einen Innendorn ballig auszubilden und aus der Gleitlagerbuchse herauszuziehen. Vielmehr kann ein Innendorn nunmehr einen geraden Absatz aufweisen, der sicherstellt, dass der betreffende Buchsenabschnitt nur an den gewünschten Stellen mit der Achse in Kontakt gelangt. Eine besondere Nachbearbeitung von Lagerbohrungen in den jeweiligen Buchsenabschnitten ist daher nicht mehr erforderlich. Darüber hinaus kann der erste und der zweite Buchsenabschnitt dann auch relativ zueinander so in der Form positioniert werden, dass eine gewünschte Länge der Gleitlagerbuchse eingestellt wird. Auch hierdurch wird es dann möglich auf eine spanende Bearbeitung der so ausgebildeten Gleitlagerbuchse zu verzichten, wodurch die Herstellungskosten einer Rotoreinheit oder einer Lagereinheit erheblich gesenkt werden können. Erfindungsgemäß wird zwischen dem ersten Buchsenabschnitt und dem zweiten Buchsenabschnitt eine Verbindungspassung ausgebildet, die eine Relativbewegung der Buchsenabschnitte in axialer Richtung ermöglicht. Die Verbindungspassung kann zwischen einer Bohrung und einer Welle ausgebildet sein, wobei die Bohrung an einem Buchsenabschnitt und die Welle an dem anderen Buchsenabschnitt ausgebildet wird. Die Verbindungspassung erlaubt dann eine Relativbewegung der Buchsenabschnitte in axialer Richtung, sodass die Buchsenabschnitte beim Einsetzen in die Form, beispielsweise auf einen Dorn, positioniert werden können, sodass eine gewünschte Länge der Gleitlagerbuchse erhalten wird.

Der erste Buchsenabschnitt kann eine erste radiale Lagerfläche an einem ersten axialen Ende und der zweite Buchsenabschnitt eine zweite radiale Lagerfläche an einem dem ersten Ende abgewandten zweiten axialen Ende der Gleitlagerbuchse ausbilden. Demnach kann die Gleitlagerbuchse an ihren jeweiligen Enden innerhalb einer Lagerbohrung in der Gleitlagerbuchse jeweils eine Lagerfläche ausbilden, die mit einer Achse in Kontakt gelangen kann. Zwischen den jeweiligen Lagerflächen kann die Lagerbohrung dann einen vergleichsweise größeren Innendurchmesser aufweisen, sodass ein Spalt zwischen der Achse und der Gleitlagerbuchse beziehungsweise dem jeweiligen Buchsenabschnitt ausgebildet wird. So muss dann die Gleitlagerbuchse nur an ihren jeweiligen Enden innerhalb einer Maßtoleranz liegend gefertigt werden. Besonders vorteilhaft ist es hier auch, dass die radialen Lagerflächen prinzipiell unabhängig voneinander ausgebildet sind, da sich dann die jeweilige Lagerfläche hinsichtlich ihrer Lage relativ zu der Achse anpassen kann. Die Anpassung kann beim Einlegen der Buchsenabschnitte in die Form, beispielsweise durch Aufstecken auf einen Dorn, der die Form der Achse aufweist, erfolgen. Weiter ist es dann auch möglich die Buchsenabschnitte, und folglich auch die verwendete Welle, mit unterschiedlichen Innendurchmessern auszuführen, um beispielsweise die Buchsenabschnitte an Lagerkräfte, eine Gleitgeschwindigkeit oder einen Bauraum anzupassen. Eine Anordnung der Lagerfläche in einem Winkel quer zu der Achse, wie bei einstückigen Gleitlagerbuchsen aus dem Stand der Technik bekannt, wird vermieden. Insgesamt kann so auch eine Lebensdauer der Gleitlagerbuchse und damit der Rotoreinheit bzw. der Lagereinheit verlängert werden.

Darüber hinaus kann der erste Buchsenabschnitt und/oder der zweite Buchsenabschnitt mit einer axialen Lagerfläche von dem jeweiligen axialen Ende ausgebildet werden. Dadurch wird es dann auch möglich die Rotoreinheit bzw. die Lagereinheit in axialer Richtung an einer Achse lagegenau zu positionieren. Beispielsweise kann an der Achse eine axiale Anlagefläche zur Anlage der axialen Lagerfläche ausgebildet sein.

Die Gleitlagerbuchse kann einen Verbindungsabschnitt umfassen, über den der erste Buchsenabschnitt und der zweite Buchsenabschnitt miteinander verbunden werden. Der Verbindungsabschnitt kann als ein weiteres Bauteil der Rotoreinheit ausgebildet sein. Der Verbindungsabschnitt kann beispielsweise eine Hülse sein, die an dem ersten Buchsenabschnitt und dem zweiten Buchsenabschnitt befestigt wird. Durch das Einsetzen des Verbindungsabschnitts kann dann auch verhindert werden, dass der polymere Werkstoff des Rotors bzw. des Lagergehäuses beim Spritzen in der Form an Lagerflächen der Buchsenabschnitte gelangt. Vorzugsweise bildet der Verbindungsabschnitt einen Spalt zwischen der Achse und der Gleitlagerbuchse aus. Darüber hinaus kann über den Verbindungsabschnitt eine Länge der Gleitlagerbuchse nach Bedarf variiert werden, sodass die Buchsenabschnitte prinzipiell identisch ausgebildet sein können, was eine Herstellung noch weiter vereinfacht.

Alternativ kann der erste Buchsenabschnitt und/oder der zweite Buchsenabschnitt einen Verbindungsabschnitt ausbilden, über den der erste Buchsenabschnitt und der zweite Buchsenabschnitt miteinander verbunden werden. Demnach kann der Verbindungsabschnitt von einem der Buchsenabschnitte, aber auch von beiden Buchsenabschnitten ausgebildet sein. Der Verbindungsabschnitt ist dann an einem Buchsenabschnitt beziehungsweise beiden Buchsenabschnitten so angeformt, dass ein Abstand zwischen den Buchsenabschnitten durch den Verbindungsabschnitt überbrückt wird. So kann ebenfalls verhindert werden, dass polymerer Werkstoff beim Spritzen in der Form an Lagerflächen der Buchsenabschnitte gelangt. Die integrale Ausbildung des Verbindungsabschnitts mit dem Buchsenabschnitt beziehungsweise den Buchsenabschnitten erlaubt die Ausbildung der Gleitlagerbuchse ohne ein weiteres Bauteil. Gleichzeitig kann der Verbindungsabschnitt auch so ausgebildet sein, dass eine Länge der Gleitlagerbuchse in festgelegten Grenzen variiert werden kann.

Der Verbindungsabschnitt kann mit einem gegenüber der Achse einen Spalt ausbildenden Innendurchmesser ausgebildet werden. Der Verbindungsabschnitt kann insbesondere hülsenförmig und mit einem Innendurchmesser ausgebildet sein, sodass ein radialer Spalt zwischen dem Verbindungsabschnitt und einer Achse ausgebildet wird. Insbesondere kann dann die Gleitlagerbuchse mit jeweils radialen Lagerflächen an gegenüberliegenden Enden der Gleitlagerbuchse ausgebildet werden. So ist es dann auch nur noch erforderlich, die Lagerflächen zentrisch relativ zu der Achse auszubilden, und nicht die gesamte Lagerbohrung der Gleitlagerbuchse.

Die Gleitlagerbuchse kann mit dem polymeren Werkstoff eingefasst, vorzugsweise vollständig radial umgeben werden. Die Gleitlagerbuchse kann so stoffschlüssig und/oder formschlüssig mit dem Rotor bzw. dem Lagergehäuse verbunden werden. Bei dem Spritzpressverfahren oder Spritzgießverfahren kann dann eine Relativposition der jeweiligen Buchsenabschnitte durch Aushärten des polymeren Werkstoffs fixiert werden.

Die Verbindungspassung kann mit einem Innendurchmesser und einem Außendurchmesser an den Buchsenabschnitten ausgebildet werden, wobei die Verbindungspassung dann dicht gegenüber dem polymeren Werkstoff ausgebildet sein kann. Die Verbindungspassung bildet demnach eine Dichtung aus, die einen Durchtritt des polymeren Werkstoffs beim Spritzen in der Form durch die Verbindungspassung verhindert. So kann dann auch kein polymerer Werkstoff an jeweilige Lagerflächen der Buchsenabschnitte gelangen.

Der erste Buchsenabschnitt und der zweite Buchsenabschnitt können so ausgebildet und in der Form angeordnet werden, dass zwischen dem ersten Buchsenabschnitt und dem zweiten Buchsenabschnitt zumindest abschnittsweise ein radialer Spalt ausgebildet wird, wobei der polymere Werkstoff bei dem Spritzpressen oder Spritzgießen in den radialen Spalt eindringen kann. Durch den radialen Spalt wird eine genauere Positionierung der Buchsenabschnitte relativ zueinander bewirkt, wobei ein Zusammenschieben der Buchsenabschnitte bei der fertigen Rotoreinheit bzw. der Lagereinheit dadurch verhindert werden kann, dass sich dann in dem radialen Spalt ausgehärteter, polymerer Werkstoff befindet.

Gleichwohl kann mittels eines Spritzdrucks bei dem Spritzpressen oder Spritzgießen eine Relativbewegung der Buchsenabschnitte in axialer Richtung an jeweilige Formeninnenflächen der Form bewirkt werden. Dieser Effekt kann insbesondere dadurch erzielt werden, dass ein radialer Spalt zwischen den Buchsenabschnitten ausgebildet ist, in den der polymere Werkstoff eindringen kann. Durch jeweilige axiale Flächen der Buchsenabschnitte, die einander gegenüberliegend den radialen Spalt ausbilden, kann der Spritzdruck auf die Buchsenabschnitte wirken und diese in axialer Richtung so auseinanderdrücken, dass der Spalt vergrößert wird und die Buchsenabschnitte an die jeweiligen Forminnenflächen der Form gedrückt werden. So kann eine Länge der Gleitlagerbuchse noch maßhaltiger ausgebildet werden, ohne dass eine spanende Bearbeitung der Gleitlagerbuchse erforderlich wäre.

Weiter ist es möglich, dass die Form mit Aufnahmen für ein erstes axiales Ende des ersten Buchsenabschnitts und ein zweites axiales Ende des zweiten Buchsenabschnitts ausgebildet wird, wobei die Buchsenabschnitte in die jeweilige Aufnahme eingesetzt werden können, wobei die Aufnahmen die axialen Enden gegenüber dem polymeren Werkstoff bei dem Spritzpressen oder Spritzgießen abdichten können. Die jeweilige Aufnahme kann beispielsweise in Form einer Sacklochbohrung ausgebildet sein, in die der jeweilige Buchsenabschnitt eingesteckt wird. Wesentlich ist, dass die Aufnahmen so beschaffen sind, dass der polymere Werkstoff bei dem Spritzen in der Form nicht an axiale Enden der Buchsenabschnitte beziehungsweise an axiale Lagerflächen der Buchsenabschnitte gelangen kann.

Der Rotor bzw. das Lagergehäuse kann aus einem mit Fasern verstärkten polymeren Werkstoff ausgebildet werden. Als Fasern können Kohlenstofffasern oder Glasfasern, vorzugsweise Kurzfasern verwendet werden. Kurzfasern können eine Länge von wenigen Millimetern bis zu 2 cm aufweisen. Alternativ können auch Langfasern verwendet werden, beispielsweise, wenn Formmassen zum Einsatz kommen, die teilweise vorgeformt sind.

Als polymerer Werkstoff kann ein Duromer, vorzugsweise Phenolharz, Epoxidharz, Polyesterharz oder Polycyclopentadienharz, oder ein Thermoplast, vorzugsweise Polypropylen, Polyphenylensulfid oder Polyetheretherketon, verwendet werden.

Die Buchsenabschnitte können aus Kohlenstoff, vorzugsweise aus Graphit, Graphit mit Phenolharzimprägnierung, karbonisierter graphitgefüllter Phenolharzmasse, faserverstärktem Polymer oder Keramik, ausgebildet werden. Weiter können Spaltmaße zwischen der Achse und einem durch die Gleitlagerbuchse ausgebildeten Gleitlager an thermische Ausdehungskoeffizienten sowie eine Wasseraufnahme beziehungsweise ein Quellverhalten der Werkstoffe unter Anwendungsbedingungen angepasst werden. So können zur Reduzierung einer Wasseraufnahme und eines Quellverhaltens hydrophobierende Additive oder Nachbehandlungen der Reibpartner, beispielsweise mittels Silikonen, eingesetzt werden.

Dem polymeren Werkstoff der Buchsenabschnitte kann daher als ein weiterer Füllstoff Graphit, Molybdänsulfid, Wolframdisulfid, Polytetraflourethylen, Glaskugeln und/oder mineralische Additive, zugegeben werden. Insbesondere kann durch die Zugabe des weiteren Füllstoffs ein Reibwert noch weiter verbessert werden. Bei einem längeren Stillstand einer Pumpe ist dann gegebenenfalls ein Anlaufwiderstand der Rotoreinheit vergleichsweise gering. Auch können die Buchsenabschnitte aus voneinander verschiedenen Werkstoffen ausgebildet werden. Die Buchsenabschnitte können so an eine jeweilige Beanspruchung einer Lagerfläche eines Buchsenabschnitts optimal angepasst werden. Beispielsweise kann ein im Bereich eines Impellers der Rotoreinheit liegender Buchsenabschnitt dann auch andere Werkstoffeigenschaften beziehungsweise tribologische Eigenschaften aufweisen als ein im Bereich eines Ankers der Rotoreinheit liegender Buchsenabschnitt. Durch die Auswahl unterschiedlicher Werkstoffe für die jeweiligen Buchsenabschnitte kann ein Reibverhalten der Gleitlagerbuchse optimiert werden, wodurch sich eine verlängerte Lebensdauer der Rotoreinheit bzw. der Lagereinheit ergibt.

Der erste Buchsenabschnitt kann mittels spanender Bearbeitung und der zweite Buchsenabschnitt mittels eines Spritzpressverfahrens oder Spritzgießverfahrens oder umgekehrt ausgebildet werden. Um besonders gute Gleiteigenschaften und eine gewünschte Spielpassung von Achse und Buchsenabschnitt zu erzielen, kann es vorgesehen sein, einen der Buchsenabschnitte nach dessen Ausbildung an Lagerflächen spanend zu bearbeiten. Unter einer spanenden Bearbeitung wird hier ein Materialabtrag jeglicher Art, beispielsweise durch Drehen, Schleifen oder Polieren, verstanden. Eine Rauheit der Gleitlagerbuchse beziehungsweise des Buchsenabschnitts an den Lagerflächen kann durch eine derartige Bearbeitung wesentlich vermindert werden, sodass sich verbesserte Gleiteigenschaften ergeben können.

Die Gleitlagerbuchse kann mit einem Länge-Durchmesser-Verhältnis von 5:1 oder größer ausgebildet werden. Demnach kann eine Länge der Gleitlagerbuchse wesentlich größer sein als ein Innendurchmesser der Gleitlagerbuchse.

Ein Dauermagnet oder eine Kurzschlusswicklung der Rotoreinheit oder der Lagereinheit kann in die Form eingelegt und mittels des Spritzpressverfahrens oder des Spritzgießverfahrens in der Form mit dem Rotor bzw. dem Lagergehäuse gefügt werden. Ein Aufpressen oder Verkleben eines Dauermagneten oder einer Kurzschlusswicklung mit der Gleitlagerbuchse oder dem Rotor ist dann nicht mehr erforderlich. Der Dauermagnet oder die Kurzschlusswicklung kann stoffschlüssig und/oder formschlüssig mit dem Rotor bzw. dem Lagergehäuse unlösbar auf diese Weise verbunden werden.

Auch kann der Dauermagnet oder die Kurzschlusswicklung mit dem polymeren Werkstoff eingefasst, vorzugsweise vollständig umgeben werden. Aus dem Stand der Technik ist es bekannt, Dauermagnete oder Kurzschlusswicklungen an den betreffenden Rotor ergänzend zu vergießen, um diese vor einem zu fördernden Medium zu schützen. Auch dieser zusätzliche Prozessschritt kann dann entfallen, da beim Ausbilden des Rotors innerhalb der Form bereits der Dauermagnet oder die Kurzschlusswicklung von dem polymeren Werkstoff umspritzt beziehungsweise umgeben werden kann, sodass der Dauermagnet oder die Kurzschlusswicklung vollständig im Werkstoff des Rotors eingebettet sein kann. Alternativ ist es auch möglich die Aufnahme an dem Rotor bzw. dem Lagergehäuse auszubilden, in die der Dauermagnet oder die Kurzschlusswicklung einfach eingesetzt wird, wobei die Aufnahme dann eine Einfassung ausbilden kann. Weiter kann der Rotor bzw. das Lagergehäuse in der Form mit dem Dauermagneten gefügt werden, wobei der Dauermagnet aus einer thermoplastischen oder duroplastischen Magnetmasse ausgebildet werden kann. Weiter kann auch eine Magnetisierung des Dauermagneten in einer Form erfolgen. Darüber hinaus ist es möglich den Rotor bzw. das Lagergehäuse und den Dauermagneten in der Form mittels eines Zweikomponenten-Spritzgussverfahrens zeitgleich auszubilden.

Die erfindungsgemäße Rotoreinheit für einen Spaltmotor ist mit einem Rotor und einer Gleitlagerbuchse zur drehbaren Anordnung des Rotors auf einer Achse ausgebildet, wobei der Rotor durch Anbringen eines polymeren Werkstoffs an der Gleitlagerbuchse mittels eines Spritzpressverfahrens oder Spritzgießverfahrens in einer Form ausgebildet ist, wobei die Gleitlagerbuchse aus einem ersten Buchsenabschnitt und einem mit dem ersten Buchsenabschnitt verbundenen zweiten Buchsenabschnitt ausgebildet ist, wobei der polymere Werkstoff an den Buchsenabschnitten angebracht ist, wobei zwischen dem ersten Buchsenabschnitt und dem zweiten Buchsenabschnitt eine Verbindungspassung ausgebildet ist, die eine Relativbewegung der Buchsenabschnitte in axialer Richtung ermöglicht. Hinsichtlich der Vorteile der erfindungsgemäßen Rotoreinheit wird auf die Vorteilsbeschreibung des erfindungsgemäßen Verfahrens verwiesen.

Weitere vorteilhafte Ausführungsformen einer Rotoreinheit ergeben sich aus den Merkmalen der auf den Anspruch 1 rückbezogenen Unteransprüche.

Die erfindungsgemäße Lagereinheit für einen Spaltrohrmotor ist mit einem Lagergehäuse und einer Gleitlagerbuchse zur drehbaren Anordnung einer Achse eines Rotors ausgebildet, wobei das Lagergehäuse durch Anbringen eines polymeren Werkstoffs an der Gleitlagerbuchse mittels eines Spritzpressverfahrens oder Spritzgießverfahrens in einer Form ausgebildet ist, wobei die Gleitlagerbuchse aus einem ersten Buchsenabschnitt und einem mit dem ersten Buchsenabschnitt verbundenen zweiten Buchsenabschnitt ausgebildet ist, wobei der polymere Werkstoff an den Buchsenabschnitten angebracht ist, wobei zwischen dem ersten Buchsenabschnitt und dem zweiten Buchsenabschnitt eine Verbindungspassung ausgebildet ist, die eine Relativbewegung der Buchsenabschnitte in axialer Richtung ermöglicht.

Weitere vorteilhafte Ausführungsformen einer Lagereinheit ergeben sich aus den Merkmalen der auf den Anspruch 2 rückbezogenen Unteransprüche.

Die erfindungsgemäße Pumpe umfasst eine erfindungsgemäße Rotoreinheit oder eine Lagereinheit. Auch hier ergeben sich vorteilhafte Ausführungsformen einer Pumpe aus den Merkmalen der auf den Anspruch 1 bzw. auf den Anspruch 2 rückbezogenen Unteransprüche.

Nachfolgend wird eine Ausführungsform der Erfindung unter Bezugnahme auf die beigefügten Zeichnungen näher erläutert.

Es zeigen:
- **Fig. 1**: eine Längsschnittansicht einer Rotoreinheit nach dem Stand der Technik;
- **Fig. 2**: eine Längsschnittansicht einer Gleitlagerbuchse in einer Form.

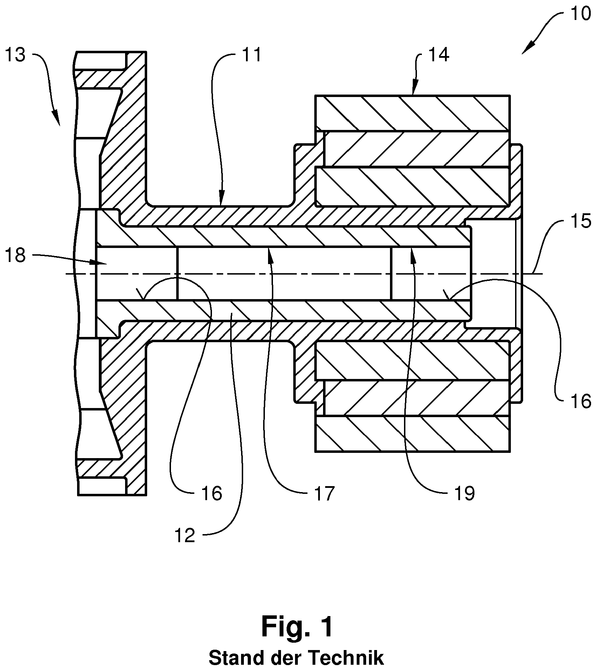

Die **Fig. 1** zeigt eine Rotoreinheit 10 nach dem Stand der Technik, wobei die Rotoreinheit 10 aus einem Rotor 11 und einer Gleitlagerbuchse 12 ausgebildet ist. Der Rotor 11 besteht aus einem polymeren Werkstoff, der an der Gleitlagerbuchse 12 mittels eines Spritzpressverfahrens oder Spritzgießverfahrens in einer hier nicht dargestellten Form angebracht wurde. Der Rotor 11 bildet einen Impeller 13 aus und weist einen Anker 14, der Teil eines hier nicht näher dargestellten Spaltmotors zum Antrieb des Impellers 13 ist, auf. Die Rotoreinheit 10 kann auf eine hier nicht näher dargestellte Achse aufgesteckt und so um eine Rotationsachse 15 der Rotoreinheit 10 rotieren. Die Gleitlagerbuchse 12 gelangt dabei mit radialen Lagerflächen 16 mit der Achse in Kontakt, wobei zwischenliegend den radialen Lagerflächen 16 ein Innendurchmesser 17 einer Lagerbohrung 18 der Gleitlagerbuchse 12 ausgebildet ist, der vergleichsweise größer ist als ein Innendurchmesser 19 der radialen Lagerflächen 16. So kann dann zwischen der hier nicht dargestellten Achse und dem Innendurchmesser 17 ein hier nicht sichtbarer Spalt ausgebildet werden. Die Gleitlagerbuchse 12 ist einstückig mittels eines Spritzpressverfahrens oder Spritzgießverfahrens ausgebildet, wobei sich das Material der Gleitlagerbuchse 12 von dem polymeren Werkstoff des Rotors 11 unterscheidet.

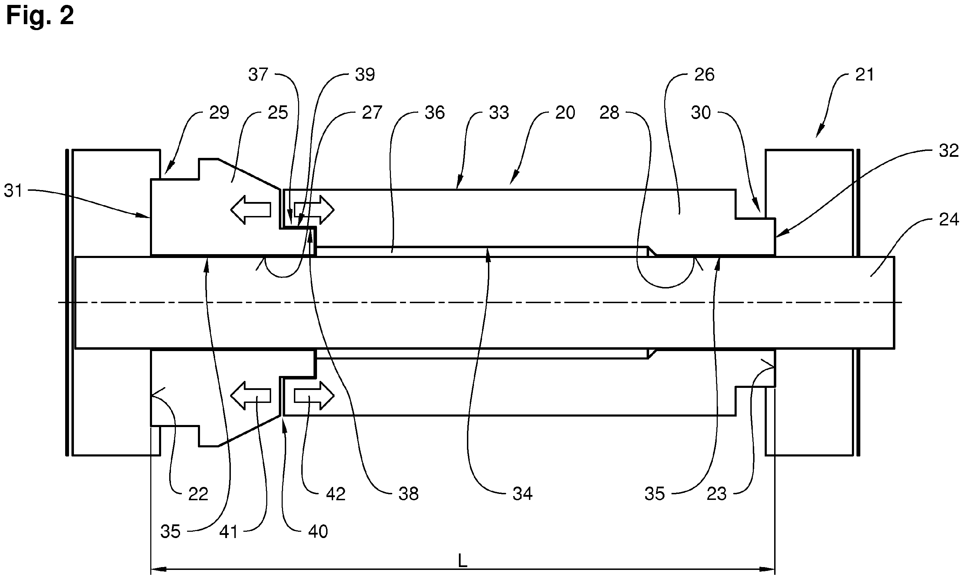

Die **Fig. 2** zeigt eine Längsschnittansicht einer Gleitlagerbuchse 20 in einer Form 21. Die Gleitlagerbuchse 20 kann in der Form 21 mit einem polymeren Werkstoff umspritzt werden, sodass beispielsweise der in **Fig. 1** dargestellte Rotor ausgebildet wird. Die hier schematisch dargestellte Form 21 bildet gegenüberliegende Forminnenflächen 22 und 23 aus und weist einen Dorn 24 auf, auf den die Gleitlagerbuchse 20 aufgesteckt ist. Die Gleitlagerbuchse 20 ist aus einem ersten Buchsenabschnitt 25 und einem zweiten Buchsenabschnitt 26 ausgebildet, wobei der erste Buchsenabschnitt 25 mit dem zweiten Buchsenabschnitt 26 verbunden ist. Der erste Buchsenabschnitt 25 bildet dabei eine erste radiale Lagerfläche 27 und der zweite Buchsenabschnitt 26 eine zweite radiale Lagerfläche 28 aus. An einem ersten axialen Ende 29 des ersten Buchsenabschnitts 25 ist eine erste axiale Lagerfläche 31 und an einem zweiten axialen Ende 30 des zweiten Buchsenabschnitts 26 eine zweite axiale Lagerfläche 32 ausgebildet. Die erste axiale Lagerfläche 31 und die zweite axiale Lagerfläche 32 liegen jeweils an den Forminnenflächen 22 beziehungsweise 23 dicht an. Ein Abstand der Forminnenflächen 22 und 23 entspricht dabei im Wesentlichen einer Länge L der Gleitlagerbuchse 20.

Der zweite Buchsenabschnitt 26 bildet einen Verbindungsabschnitt 33 mit einem Innendurchmesser 34 aus, der vergleichsweise größer als ein Innendurchmesser 35 der radialen Lagerflächen 27 und 28 ausgebildet ist, und so einen Spalt 36 an dem Dorn 24 in dem Verbindungsabschnitt 33 ausbildet. Weiter ist zwischen dem ersten Buchsenabschnitt 25 und dem zweiten Buchsenabschnitt 26 eine Verbindungspassung 37 mit einem Innendurchmesser 38 an dem zweiten Buchsenabschnitt 26 und einem Außendurchmesser 39 an dem ersten Buchsenabschnitt 25 ausgebildet. Die Verbindungspassung 37 erlaubt eine Relativbewegung der Buchsenabschnitte 25 und 26, wobei die Verbindungspassung 37 eine Passage von polymeren Werkstoff beim Einspritzen in die Form 21 in den Spalt 36 unterbindet.

Weiter ist im Bereich der Verbindungspassung 37 zwischen dem ersten Buchsenabschnitt 25 und dem zweiten Buchsenabschnitt 26 ein radialer Spalt 40 ausgebildet, in den der polymere Werkstoff bei dem Spritzpressen oder Spritzgießen eindringt. Dadurch wird bewirkt, dass der erste Buchsenabschnitt 25 und der zweite Buchsenabschnitt 26 in Richtung der hier dargestellten Pfeile 41 und 42 jeweils gedrückt wird, sodass die erste axiale Lagerfläche 31 und die zweite axiale Lagerfläche 32 an die jeweilige Forminnenfläche 22 beziehungsweise 23 gepresst werden. Nach einem Aushärten des polymeren Werkstoffs des Rotors ist dann eine mechanische Bearbeitung der Gleitlagerbuchse 20 nicht mehr erforderlich. Eine eventuelle Schwindung kann bei einer Herstellung der Buchsenabschnitte 25 und 26 unberücksichtigt bleiben, da die bereits fertig ausgebildeten Buchsenabschnitte 25 und 26 an die Länge L der Gleitlagerbuchse 20 in der Form 21 angepasst werden. Gleichwohl ist es möglich für die Buchsenabschnitte 25 und 26 unterschiedliche Werkstoffe auszuwählen, um die Buchsenabschnitte 25 und 26 noch besser an eine mögliche Belastung anzupassen. Bei der Gleitlagerbuchse 20 ist der erste Buchsenabschnitt 25 im Bereich eines hier nicht dargestellten Impellers des Rotors angeordnet.

## Patentansprüche

1. Verfahren zur Herstellung einer Rotoreinheit, wobei die Rotoreinheit mit einem Rotor und einer Gleitlagerbuchse (20) zur drehbaren Anordnung des Rotors auf einer Achse ausgebildet wird, wobei die Gleitlagerbuchse in eine Form (21) eingelegt wird, wobei der Rotor durch Anbringen eines polymeren Werkstoffs an der Gleitlagerbuchse mittels eines Spritzpressverfahrens oder Spritzgießverfahrens in der Form ausgebildet wird wobei die Gleitlagerbuchse aus einem ersten Buchsenabschnitt (25) und einem mit dem ersten Buchsenabschnitt verbundenen zweiten Buchsenabschnitt (26) ausgebildet wird,
**dadurch gekennzeichnet,**
**dass** die Buchsenabschnitte in die Form eingelegt werden, wobei der polymere Werkstoff an den Buchsenabschnitten angebracht wird, wobei zwischen dem ersten Buchsenabschnitt und dem zweiten Buchsenabschnitt eine Verbindungspassung (37) ausgebildet wird, die eine Relativbewegung der Buchsenabschnitte in axialer Richtung ermöglicht.

2. Verfahren zur Herstellung einer Lagereinheit, wobei die Lagereinheit mit einem Lagergehäuse und einer Gleitlagerbuchse zur drehbaren Anordnung einer Achse eines Rotors ausgebildet wird, wobei die Gleitlagerbuchse in eine Form eingelegt wird, wobei das Lagergehäuse durch Anbringen eines polymeren Werkstoffs an der Gleitlagerbuchse mittels eines Spritzpressverfahrens oder Spritzgießverfahrens in der Form ausgebildet wird, wobei die Gleitlagerbuchse aus einem ersten Buchsenabschnitt und einem mit dem ersten Buchsenabschnitt verbundenen zweiten Buchsenabschnitt ausgebildet wird,
**dadurch gekennzeichnet,**
**dass** die Buchsenabschnitte in die Form eingelegt werden, wobei der polymere Werkstoff an den Buchsenabschnitten angebracht wird, wobei zwischen dem ersten Buchsenabschnitt und dem zweiten Buchsenabschnitt eine Verbindungspassung ausgebildet wird, die eine Relativbewegung der Buchsenabschnitte in axialer Richtung ermöglicht.

3. Verfahren nach Anspruch 1 oder 2,
**dadurch gekennzeichnet,**
**dass** der erste Buchsenabschnitt (25) eine erste radiale Lagerfläche (27) an einem ersten axialen Ende (29) und der zweite Buchsenabschnitt (26) eine zweite radiale Lagerfläche (28) an einem dem ersten axialen Ende abgewandten zweiten axialen Ende (30) der Gleitlagerbuchse (20) ausbilden.

4. Verfahren nach Anspruch 3,
**dadurch gekennzeichnet,**
**dass** der erste Buchsenabschnitt (25) und/oder der zweite Buchsenabschnitt (26) mit einer axialen Lagerfläche (31, 32) an dem jeweiligen axialen Ende (29, 30) ausgebildet werden.

5. Verfahren nach einem der vorangehenden Ansprüche,
**dadurch gekennzeichnet,**
**dass** die Gleitlagerbuchse einen Verbindungsabschnitt umfasst, über den der erste Buchsenabschnitt und der zweite Buchsenabschnitt miteinander verbunden werden.

6. Verfahren nach einem der Ansprüche 1 bis 4,
**dadurch gekennzeichnet,**
**dass** der erste Buchsenabschnitt (25) und/oder der zweite Buchsenabschnitt (26) einen Verbindungsabschnitt (33) ausbilden, über den der erste Buchsenabschnitt und der zweite Buchsenabschnitt miteinander verbunden werden.

7. Verfahren nach Anspruch 5 oder 6,
**dadurch gekennzeichnet,**
**dass** der Verbindungabschnitt (33) mit einem gegenüber der Achse einen Spalt (36) ausbildenden Innendurchmesser (34) ausgebildet wird.

8. Verfahren nach einem der vorangehenden Ansprüche,
**dadurch gekennzeichnet,**
**dass** die Gleitlagerbuchse (20) mit dem polymeren Werkstoff eingefasst, vorzugsweise vollständig radial umgeben wird.

9. Verfahren nach einem der vorangehenden Ansprüche,
**dadurch gekennzeichnet,**
**dass** die Verbindungspassung (37) mit einem Innendurchmesser (38) und einem Außendurchmesser (39) an den Buchsenabschnitten (25, 26) ausgebildet wird, wobei die Verbindungspassung dicht gegenüber dem polymeren Werkstoff ausgebildet wird.

10. Verfahren nach einem der vorangehenden Ansprüche,
**dadurch gekennzeichnet,**
**dass** der erste Buchsenabschnitt (25) und der zweite Buchsenabschnitt (26) so ausgebildet und in der Form (21) angeordnet werden, dass zwischen dem ersten Buchsenabschnitt und dem zweiten Buchsenabschnitt zumindest abschnittsweise ein radialer Spalt (40) ausgebildet wird, wobei der polymere Werkstoff bei dem Spritzpressen oder Spritzgießen in den radialen Spalt eindringt.

11. Verfahren nach einem der vorangehenden Ansprüche,
**dadurch gekennzeichnet,**
**dass** mittels eines Spritzdrucks bei dem Spritzpressen oder Spritzgießen eine Relativbewegung der Buchsenabschnitte (25, 26) in axialer Richtung an jeweilige Forminnenflächen (22, 23) der Form (21) bewirkt wird.

12. Verfahren nach einem der vorangehenden Ansprüche,
**dadurch gekennzeichnet,**
**dass** die Form (21) mit Aufnahmen für ein erstes axiales Ende (29) des ersten Buchsenabschnitts (25) und ein zweites axiales Ende (30) des zweiten Buchsenabschnitts (26) ausgebildet wird, wobei die Buchsenabschnitte in die jeweilige Aufnahme eingesetzt werden, wobei die Aufnahmen die axialen Enden gegenüber dem polymeren Werkstoff bei dem Spritzpressen oder Spritzgießen abdichten.

13. Verfahren nach einem der vorangehenden Ansprüche,
**dadurch gekennzeichnet,**
**dass** der Rotor oder das Lagergehäuse aus einem mit Fasern verstärkten polymeren Werkstoff ausgebildet wird.

14. Verfahren nach Anspruch 13,
**dadurch gekennzeichnet,**
**dass** als polymerer Werkstoff ein Duromer, vorzugsweise Phenolharz, Epoxidharz, Polyesterharz oder Polycyclopentadienharz, oder ein Thermoplast, vorzugsweise Polypropylen, Polyphenylensulfid oder Polyetheretherketon, verwendet wird.

15. Verfahren nach einem der vorangehenden Ansprüche,
**dadurch gekennzeichnet,**
**dass** die Buchsenabschnitte (25, 26) aus Kohlenstoff, vorzugsweise aus Graphit, Graphit mit Phenolharzimprägnierung, karbonisierter graphitgefüllter Phenolharzmasse, faserverstärktem Polymer oder Keramik, ausgebildet werden.

16. Verfahren nach Anspruch 15,
**dadurch gekennzeichnet,**
**dass** einem polymeren Werkstoff der Buchsenabschnitte (25, 26) als ein weiterer Füllstoff Graphit, Molybdänsulfid, Wolframdisulfid, Polytetraflourethylen, Glaskugeln und/oder mineralische Additive, zugegeben wird.

17. Verfahren nach einem der vorangehenden Ansprüche,
**dadurch gekennzeichnet,**
**dass** die Buchsenabschnitte (25, 26) aus voneinander verschiedenen Werkstoffen ausgebildet werden.

18. Verfahren nach einem der vorangehenden Ansprüche,
**dadurch gekennzeichnet,**
**dass** der erste Buchsenabschnitt (25) mittels spanender Bearbeitung und der zweite Buchsenabschnitt (26) mittels eines Spritzpressverfahrens oder Spritzgießverfahrens ausgebildet werden.

19. Verfahren nach einem der vorangehenden Ansprüche,
**dadurch gekennzeichnet,**
**dass** die Gleitlagerbuchse (20) mit einem Länge-Durchmesser-Verhältnis von 5:1 oder größer ausgebildet wird.

20. Verfahren nach einem der vorangehenden Ansprüche,
**dadurch gekennzeichnet,**
**dass** ein Dauermagnet oder eine Kurzschlusswicklung der Rotoreinheit oder der Lagereinheit in die Form (21) eingelegt und mittels des Spritzpressverfahrens oder des Spritzgießverfahrens in der Form mit dem Rotor bzw. dem Lagergehäuse gefügt wird.

21. Rotoreinheit für einen Spaltrohrmotor, wobei die Rotoreinheit mit einem Rotor und einer Gleitlagerbuchse (20) zur drehbaren Anordnung des Rotors auf einer Achse ausgebildet ist, wobei der Rotor durch Anbringen eines polymeren Werkstoffs an der Gleitlagerbuchse mittels eines Spritzpressverfahrens oder Spritzgießverfahrens in einer Form (21) ausgebildet ist, wobei die Gleitlagerbuchse aus einem ersten Buchsenabschnitt (25) und einem mit dem ersten Buchsenabschnitt verbundenen zweiten Buchsenabschnitt (26) ausgebildet ist,
**dadurch gekennzeichnet,**
**dass** der polymere Werkstoff an den Buchsenabschnitten angebracht ist, wobei zwischen dem ersten Buchsenabschnitt und dem zweiten Buchsenabschnitt eine Verbindungspassung (37) ausgebildet ist, die eine Relativbewegung der Buchsenabschnitte in axialer Richtung ermöglicht.

22. Lagereinheit für einen Spaltrohrmotor, wobei die Lagereinheit mit einem Lagergehäuse und einer Gleitlagerbuchse zur drehbaren Anordnung einer Achse eines Rotors ausgebildet ist, wobei das Lagergehäuse durch Anbringen eines polymeren Werkstoffs an der Gleitlagerbuchse mittels eines Spritzpressverfahrens oder Spritzgießverfahrens in einer Form ausgebildet ist, wobei die Gleitlagerbuchse aus einem ersten Buchsenabschnitt und einem mit dem ersten Buchsenabschnitt verbundenen zweiten Buchsenabschnitt ausgebildet ist,
**dadurch gekennzeichnet,**
**dass** der polymere Werkstoff an den Buchsenabschnitten angebracht ist, wobei zwischen dem ersten Buchsenabschnitt und dem zweiten Buchsenabschnitt eine Verbindungspassung ausgebildet ist, die eine Relativbewegung der Buchsenabschnitte in axialer Richtung ermöglicht.

23. Pumpe mit einer Rotoreinheit nach Anspruch 21 oder einer Lagereinheit nach Anspruch 22.

## Claims

1. A method for producing a rotor unit, wherein the rotor unit is realized with a rotor and a plain bearing bush (20) for the rotatable arrangement of the rotor on a spindle, wherein the plain bearing bush is placed into a mold (21), wherein the rotor is produced by attaching a polymeric material to the plain bearing bush in the mold by means of a transfer molding process or an injection molding process, and
wherein the plain bearing bush is composed of a first bush section (25) and a second bush section (26) that is connected to the first bush section,
**characterized in that**
the bush sections are placed into the mold, wherein the polymeric material is attached to the bush sections, and wherein a connecting fit (37), which allows a relative motion between the bush sections in the axial direction, is produced between the first bush section and the second bush section.

2. A method for producing a bearing unit, wherein the bearing unit is realized with a bearing housing and a plain bearing bush for the rotatable arrangement of a spindle of a rotor, wherein the plain bearing bush is placed into a mold, wherein the bearing housing is produced by attaching a polymeric material to the plain bearing bush in the mold by means of a transfer molding process or an injection molding process, and wherein the plain bearing bush is composed of a first bush section and a second bush section that is connected to the first bush section,
**characterized in that**
the bush sections are placed into the mold, wherein the polymeric material is attached to the bush sections, and wherein a connecting fit, which allows a relative motion between the bush sections in the axial direction, is produced between the first bush section and the second bush section.

3. The method according to claim 1 or 2,
**characterized in that**
the first bush section (25) forms a first radial bearing surface (27) on a first axial end (29) of the plain bearing bush (20) and the second bush section (26) forms a second radial bearing surface (28) on a second axial end (30) lying opposite of the first axial end.

4. The method according to claim 3,
**characterized in that**
the first bush section (25) and/or the second bush section (26) is/are formed with an axial bearing surface (31, 32) on the respective axial end/s (29, 30).

5. The method according to one of the preceding claims,
**characterized in that**
the plain bearing bush comprises a connecting section, by means of which the first bush section and the second bush section are connected to one another.

6. The method according to one of claims 1 to 4,
**characterized in that**
the first bush section (25) and/or the second bush section (26) form/s a connecting section (33), by means of which the first bush section and the second bush section are connected to one another.

7. The method according to claim 5 or 6,
**characterized in that**
the connecting section (33) is realized with such an inside diameter (34) that a gap (36) is formed with respect to the spindle.

8. The method according to one of the preceding claims,
**characterized in that**
the plain bearing bush (20) is encased, preferably completely enclosed radially, by the polymeric material.

9. The method according to one of the proceeding claims,
**characterized in that**
the connecting fit (37) is designed with an inside diameter (38) and an outside diameter (39) on the bush sections (25, 26), wherein the connecting fit is realized tight with respect to the polymeric material.

10. The method according to one of the preceding claims,
**characterized in that**
the first bush section (25) and the second bush section (26) are designed and arranged in the mold (21) in such a way that a radial gap (40) is at least sectionally formed between the first bush section and the second bush section, wherein the polymeric material penetrates into the radial gap during the transfer molding or injection molding process.

11. The method according to one of the preceding claims,
**characterized in that**
a relative motion between the bush sections (25, 26) in the axial direction against respective inner surfaces (22, 23) of the mold (21) is realized by means of an injection pressure during the transfer molding or injection molding process.

12. The method according to one of the preceding claims,
**characterized in that**
the mold (21) is designed with receptacles for a first axial end (29) of the first bush section (25) and a second axial end (30) of the second bush section (26), wherein the bush sections are inserted into the respective receptacles, and wherein the receptacles seal the axial ends with respect to the polymeric material during the transfer molding or injection molding process.

13. The method according to one of the preceding claims,
**characterized in that**
the rotor or the bearing housing is made of a fiber-reinforced polymeric material.

14. The method according to claim 13,
**characterized in that**
a thermosetting polymer, preferably phenolic resin, epoxy resin, polyester resin or polycyclopentadiene resin, or a thermoplastic polymer, preferably polypropylene, polyphenylene sulfide or polyetheretherketone, is used as polymeric material.

15. The method according to one of the preceding claims,
**characterized in that**
the bush sections (25, 26) are made of carbon, preferably of graphite, graphite with phenolic resin impregnation, a carbonized, graphite-filled phenolic resin compound, fiber-reinforced polymer or ceramic.

16. The method according to claim 15,
**characterized in that**
an additional filler in the form of graphite, molybdenum sulfide, tungsten disulfide, polytetrafluoroethylene, glass spheres and/or mineral additives is added to the polymeric material of the bush sections (25, 26).

17. The method according to one of the preceding claims,
**characterized in that**
the bush sections (25, 26) are made of different materials.

18. The method according to one of the preceding claims,
**characterized in that**
the first bush section (25) is produced by means of machining and the second bush section (26) is produced by means of a transfer molding or injection molding process.

19. The method according to one of the preceding claims,
**characterized in that**
the plain bearing bush (20) is designed with a length-diameter ratio of 5:1 or greater.

20. The method according to one of the preceding claims,
**characterized in that**
a permanent magnet or a cage winding of the rotor unit or the bearing unit is placed into the mold (21) and joined with the rotor or the bearing housing in the mold by means of the transfer molding process or the injection molding process.

21. A rotor unit for a canned motor, wherein the rotor unit is realized with a rotor and a plain bearing bush (20) for the rotatable arrangement of the rotor on a spindle, wherein the rotor is produced by attaching a polymeric material to the plain bearing bush in a mold (21) by means of a transfer molding process or an injection molding process, and wherein the plain bearing bush is composed of a first bush section (25) and a second bush section (26) that is connected to the first bush section,
**characterized in that**
the polymeric material is attached to the bush sections, wherein a connecting fit (37), which allows a relative motion between the bush sections in the axial direction, is produced between the first bush section and the second bush section.

22. A bearing unit for a canned motor, wherein the bearing unit is realized with a bearing housing and a plain bearing bush for the rotatable arrangement of a spindle of a rotor, wherein the bearing housing is produced by attaching a polymeric material to the plain bearing bush in a mold by means of a transfer molding process or an injection molding process, and wherein the plain bearing bush is composed of a first bush section and a second bush section that is connected to the first bush section,
**characterized in that**
the polymeric material is attached to the bush sections, wherein a connecting fit, which allows a relative motion between the bush sections in the axial direction, is produced between the first bush section and the second bush section.

23. A pump with a rotor unit according to claim 21 or a bearing unit according to claim 22.

## Revendications

1. Procédé pour la production d'une unité de rotor, l'unité de rotor étant réalisée ayant un rotor et un coussinet lisse (20) pour la disposition rotative du rotor sur un arbre, le coussinet lisse étant mis dans un moule (21), le rotor étant produit dans le moule en attachant un matériau polymère au coussinet lisse au moyen d'un procédé de moulage par transfert ou d'un procédé de moulage par injection, et le coussinet lisse étant composé d'une première section de coussinet (25) et d'une deuxième section de coussinet (26) qui est reliée à la première section de coussinet,
**caractérisé en ce que**
les sections de coussinet sont mises dans le moule, le matériau polymère étant attaché aux sections de coussinet, et un ajustement de liaison (37), qui permet un mouvement relatif entre les sections de coussinet dans la direction axiale, étant produit entre la première section de coussinet et la deuxième section de coussinet.

2. Procédé pour la production d'une unité de palier, l'unité de palier étant réalisée ayant un logement de palier et un coussinet lisse pour la disposition rotative d'un arbre d'un rotor, le coussinet lisse étant mis dans un moule, le logement de palier étant produit dans le moule en attachant un matériau polymère au coussinet lisse au moyen d'un procédé de moulage par transfert ou d'un procédé de moulage par injection, et le coussinet lisse étant composé d'une première section de coussinet et d'une deuxième section de coussinet qui est reliée à la première section de coussinet,
**caractérisé en ce que**
les sections de coussinet sont mises dans le moule, le matériau polymère étant attaché aux sections de coussinet, et un ajustement de liaison, qui permet un mouvement relatif entre les sections de coussinet dans la direction axiale, étant produit entre la première section de coussinet et la deuxième section de coussinet.

3. Procédé selon la revendication 1 ou 2,
**caractérisé en ce que**
la première section de coussinet (25) forme une première surface (27) de palier radiale sur une première extrémité axiale (29) et la deuxième section de coussinet (26) forme une deuxième surface (28) de palier radiale sur une deuxième extrémité axiale (30) du coussinet lisse (20) opposée à la première extrémité axiale.

4. Procédé selon la revendication 3,
**caractérisé en ce que**
la première section de coussinet (25) et/ou la deuxième section de coussinet (26) est formé/sont formées ayant une surface (31, 32) de palier axiale sur l'extrémité axiale (29, 30) respective.

5. Procédé selon l'une quelconque des revendications précédentes,
**caractérisé en ce que**
le coussinet lisse comprend une section de liaison, au moyen de laquelle la première section de coussinet et la deuxième section de coussinet sont reliées l'une à l'autre.

6. Procédé selon l'une quelconque des revendications 1 à 4,
**caractérisé en ce que**
la première section de coussinet (25) et/ou la deuxième section de coussinet (26) forme/forment une section de liaison (33), au moyen de laquelle la première section de coussinet et la deuxième section de coussinet sont reliées l'une à l'autre.

7. Procédé selon la revendication 5 ou 6,
**caractérisé en ce que**
la section de liaison (33) est réalisée ayant un tel diamètre intérieur (34) qu'un interstice (36) est formé par rapport à l'arbre.

8. Procédé selon l'une quelconque des revendications précédentes,
**caractérisé en ce que**
le coussinet lisse (20) est entouré par le matériau polymère, de préférence complètement entouré radialement.

9. Procédé selon l'une quelconque des revendications précédentes,
**caractérisé en ce que**
l'ajustement de liaison (37) est réalisé ayant un diamètre intérieur (38) et un diamètre extérieur (39) sur les sections de coussinet (25, 26), l'ajustement de liaison étant réalisé de manière étanche par rapport au matériau polymère.

10. Procédé selon l'une quelconque des revendications précédentes,
**caractérisé en ce que**
la première section de coussinet (25) et la deuxième section de coussinet (26) sont réalisées et disposées dans le moule (21) de telle manière qu'un interstice radial (40) est formé au moins par sections entre la première section de coussinet et la deuxième section de coussinet, le matériau polymère pénétrant dans l'interstice radial pendant le moulage par transfert ou le moulage par injection.

11. Procédé selon l'une quelconque des revendications précédentes,
**caractérisé en ce qu'**
un mouvement relatif entre les sections de coussinet (25, 26) dans la direction axiale contre des surfaces intérieures (22, 23) respectives du moule (21) est provoqué au moyen d'une pression d'injection pendant le moulage par transfert ou le moulage par injection.

12. Procédé selon l'une quelconque des revendications précédentes,
**caractérisé en ce que**
le moule (21) est réalisé ayant des réceptions pour une première extrémité axiale (29) de la première section de coussinet (25) et pour une deuxième extrémité axiale (30) de la deuxième section de coussinet (26), les sections de coussinet étant insérées dans les réceptions respectifs, et les réceptions étanchéifiant les extrémités axiales par rapport au matériau polymère pendant le moulage par transfert ou le moulage par injection.

13. Procédé selon l'une quelconque des revendications précédentes,
**caractérisé en ce que**
le rotor ou le logement de palier est fait d'un matériau polymère renforcé par des fibres.

14. Procédé selon la revendication 13,
**caractérisé en ce qu'**
une résine thermodurcissable, de préférence une résine phénolique, une résine époxydique, une résine polyester ou une résine de polycyclopentadiène, ou une matière thermoplastique, de préférence un polypropylène, un poly(sulfure de phénylène) ou un polyétheréthercétone, est utilisée comme matériau polymère.

15. Procédé selon l'une quelconque des revendications précédentes,
**caractérisé en ce que**
les sections de coussinet (25, 26) sont en carbone, de préférence en graphite, en graphite avec une imprégnation de résine phénolique, en une composition de résine phénolique carbonisée et chargée de graphite, en un polymère renforcé par des fibres ou en céramique.

16. Procédé selon la revendication 15,
**caractérisé en ce qu'**
une charge additionnelle de graphite, de sulfure de molybdène, de disulfure de tungstène, de polytétrafluoroéthylène, de sphères de verre et/ou d'additifs minéraux est ajoutée au matériau polymère des sections de coussinet (25, 26).

17. Procédé selon l'une quelconque des revendications précédentes,
**caractérisé en ce que**
les sections de coussinet (25, 26) sont faites de matériaux différents.

18. Procédé selon l'une quelconque des revendications précédentes,
**caractérisé en ce que**
la première section de coussinet (25) est produite au moyen de l'usinage à l'outil et la deuxième section de coussinet (26) est produite au moyen d'un procédé de moulage par transfert ou d'un procédé de moulage par injection.

19. Procédé selon l'une quelconque des revendications précédentes,
**caractérisé en ce que**
le coussinet lisse (20) est réalisé ayant un rapport de longueur-diamètre égal ou supérieur à 5 : 1.

20. Procédé selon l'une quelconque des revendications précédentes,
**caractérisé en ce qu'**
un aimant permanent ou un enroulement de court-circuit de l'unité de rotor ou de l'unité de palier est mis dans le moule (21) et est joint au rotor ou au logement de palier dans le moule au moyen d'un procédé de moulage par transfert ou d'un procédé de moulage par injection.

21. Unité de rotor pour un moteur à stator chemisé, l'unité de rotor étant réalisée ayant un rotor et un coussinet lisse (20) pour la disposition rotative du rotor sur un arbre, le rotor étant produit dans un moule (21) en attachant un matériau polymère au coussinet lisse au moyen d'un procédé de moulage par transfert ou d'un procédé de moulage par injection, et le coussinet lisse étant composé d'une première section de coussinet (25) et d'une deuxième section de coussinet (26) qui est reliée à la première section de coussinet,
**caractérisé en ce que**
le matériau polymère est attaché aux sections de coussinet, un ajustement de liaison (37), qui permet un mouvement relatif entre les sections de coussinet dans la direction axiale, étant produit entre la première section de coussinet et la deuxième section de coussinet.

22. Unité de palier pour un moteur à stator chemisé, l'unité de palier étant réalisée ayant un logement de palier et un coussinet lisse pour la disposition rotative d'un arbre d'un rotor, le logement de palier étant produit dans un moule en attachant un matériau polymère au coussinet lisse au moyen d'un procédé de moulage par transfert ou d'un procédé de moulage par injection, et le coussinet lisse étant composé d'une première section de coussinet et d'une deuxième section de coussinet qui est reliée à la première section de coussinet,
**caractérisé en ce que**
le matériau polymère est attaché aux sections de coussinet, un ajustement de liaison, qui permet un mouvement relatif entre les sections de coussinet dans la direction axiale, étant produit entre la première section de coussinet et la deuxième section de coussinet.

23. Pompe ayant une unité de rotor selon la revendication 21 ou une unité de palier selon la revendication 22.
